# EUROPEAN PATENT SPECIFICATION

(11) **EP 3 509 172 B1**
(45) Date of publication and mention of the grant of the patent: **16.03.2022**
(21) Application number: 19152781.1
(22) Date of filing: 26.06.2014
(51) Int. Cl.: H02G 3/04, B64C 39/02, B64C 1/36, B64C 25/06, B64C 25/60

(54) **AN AERIAL VEHICLE AND A SIGNAL LINE PROTECTION ASSEMBLY THEREOF**
LUFTFAHRZEUG UND SIGNALLEITUNGSSCHUTZANORDNUNG DAFÜR
VÉHICULE AÉRIEN ET ENSEMBLE DE PROTECTION DE LIGNE DE SIGNAL ASSOCIÉ

(43) Date of publication of application: 10.07.2019
(62) Divisional of application: 14896036.2
(73) Proprietor: SZ DJI Technology Co., Ltd., Shenzhen, Guangdong 518057 (CN)
(72) Inventor: Ou, Di, Shenzhen, Guangdong, 518057 (CN)
(74) Representative: Appelt, Christian W.

(56) References cited:
- EP-A1- 2 933 189
- EP-A2- 2 416 463
- CN-A- 103 786 878
- CN-U- 203 306 225
- DE-A1- 10 209 881
- DE-A1-102005 014 948
- US-A1- 2012 241 555
- US-A1- 2013 287 577

## Description

### TECHNICAL FIELD

The present invention relates to an unmanned aerial vehicle (UAV), and more particularly, to an aerial vehicle and a signal line protection assembly thereof.

### BACKGROUND OF THE INVENTION

An unmanned aerial vehicle is supported on the ground by foot stands before it takes off. The flight of UAV completes after the foot stands touch the ground in landing. A plurality of signal lines are introduced since the foot stands may be provided with various components including propulsion systems, electronic speed controllers, etc. In prior art, the signal lines are disposed along an exterior of the foot stands, making them vulnerable to damages from external environment.

US 2012/241555 A1 describes a support block of each motor of a drone that comprises: a support part onto which are fastened an electric motor for driving a propulsion group of the drone, and at least one component of the propulsion group intended to be coupled to the motor; a stand foot for supporting the drone on the ground; and a connection element extending between the support part and the stand foot. The stand foot and the connection element providing together a clearance space for the electric motor during the placement of the motor in its fastening position on the support part.

### SUMMARY OF THE INVENTION

The present invention relates to a signal line protection assembly according to independent claim 1 and to an aerial vehicle according to claim 11. Preferred embodiments are described in the dependent claims. Aspects of the invention solve the prior art problem that a signal line is vulnerable to damages from external environment.

The signal line protection assembly comprises a foot stand and a protection sleeve. The foot stand comprises a foot stand sleeve. At least a portion of the protection sleeve is received in the foot stand sleeve. The protection sleeve receives a signal line therein to prevent the signal line from damages of external environment. The foot stand comprises a lower cover below the electronic speed controller compartment, one end of the lower cover is connected with one end of the electronic speed controller compartment. The foot stand further comprises a shock absorber that is connected between the other end of the electronic speed controller compartment and the other end of the lower cover, wherein the shock absorber, the electronic speed controller compartment and the lower cover form a triangular structure.

In some embodiments, the foot stand sleeve comprises a bearing member and a receiving portion. One side of the bearing member bears a propulsion system for driving a rotor. The receiving portion is provided at the other side of the bearing member for receiving and fixing the protection sleeve.

In some embodiments, glue is provided at position where the protection sleeve contacts with the receiving portion so as to fix the protection sleeve.

In some embodiments, at least two foot stands are provided. Two ends of the protection sleeve are respectively received in the foot stand sleeves of the foot stand. The protection sleeve is provided with a wire inlet. The bearing member of the foot stand sleeve is provided with a wire outlet at a position corresponding to the end of the protection sleeve. The signal line is routed through the protection sleeve from the wire inlet to the end of the protection sleeve 131, and further leaded out to the propulsion system through the wire outlet.

The foot stand is provided with an electronic speed controller compartment for receiving an electronic speed controller of the aerial vehicle. In some embodiments, the bearing member of the foot stand sleeve is disposed on the electronic speed controller compartment, and the receiving portion of the foot stand sleeve is received in the electronic speed controller compartment, such that the protection sleeve is received in the electronic speed controller compartment.

The foot stand comprises a lower cover below the electronic speed controller compartment. One end of the lower cover is connected with one end of the electronic speed controller compartment. In some embodiments, the lower cover is provided with an antenna compartment for receiving an antenna and preventing the antenna from damages of external environment. The antenna is capable of receiving an external signal.

In some embodiments, the protection sleeve receives a data line and a power line of the electronic speed controller and a data line of the antenna.

To address the technical problem as discussed hereinabove, a technical solution proposed in the present invention provides an aerial vehicle comprising a signal line protection assembly. The signal line protection assembly comprises a foot stand and a protection sleeve. The foot stand comprises a foot stand sleeve. At least a portion of the protection sleeve is received in the foot stand sleeve. The protection sleeve receives a signal line therein to prevent the signal line from damages of external environment.

In some embodiments, the foot stand sleeve comprises a bearing member and a receiving portion. One side of the bearing member bears a propulsion system for driving a rotor. The receiving portion is provided at the other side of the bearing member for receiving and fixing the protection sleeve.

In some embodiments, glue is provided at position where the protection sleeve contacts with the receiving portion so as to fix the protection sleeve.

In some embodiments, at least two foot stands are provided. Two ends of the protection sleeve are respectively received in the foot stand sleeves of the foot stand. The protection sleeve is provided with a wire inlet. The bearing member of the foot stand sleeve is provided with a wire outlet at a position corresponding to the end of the protection sleeve. The signal line is routed through the protection sleeve from the wire inlet to the end of the protection sleeve 131, and further leaded out to the propulsion system through the wire outlet.

As compared to the prior art, in the present invention, at least a portion of the protection sleeve is received in the foot stand sleeve, and the signal line is received in the protection sleeve, such that the signal line is received within the foot stand sleeve. The signal line is prevented from damages of external environment.

### BRIEF DESCRIPTION OF THE DRAWINGS

**FIG. 1** is a diagram showing a structure of an aerial vehicle in accordance with an embodiment of the present invention;
**FIG. 2** is an exploded view of a foot stand of **FIG. 1**;
**FIG. 3** is a front view of a signal line protection assembly of **FIG. 1**;
**FIG. 4** is a section view of a signal line protection assembly along E-F of **FIG. 3****.**

### DETAILED DESCRIPTION OF THE INVENTION

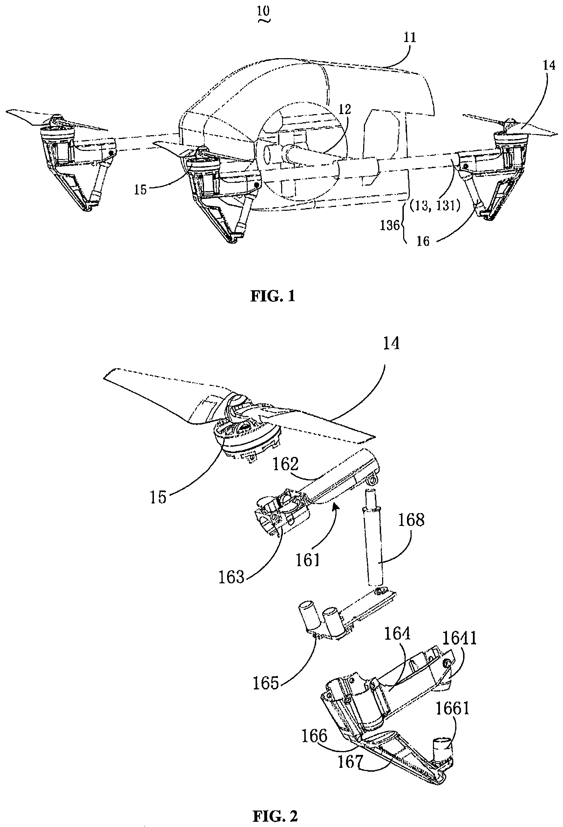

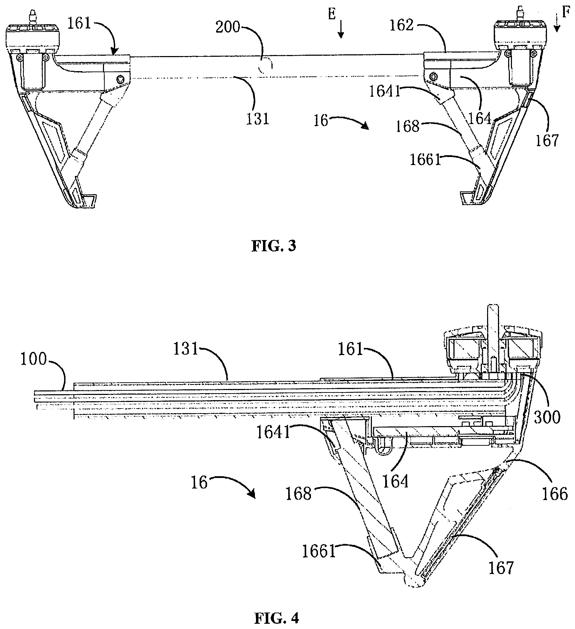

Refer to **FIGS. 1-4****.** **FIG. 1** is a diagram showing a structure of an aerial vehicle in accordance with an embodiment of the present invention. **FIG. 2** is an exploded view of a foot stand of **FIG. 1****.** **FIG. 3** is a front view of a signal line protection assembly of **FIG. 1****.** **FIG. 4** is a section view of a signal line protection assembly along E-F of **FIG. 3****.** As shown in **FIG. 1****,** an aerial vehicle **10** of the present invention comprises a vehicle body **11,** at least two arms **12** extending from the vehicle body **11** and a support member **13** extending in a direction perpendicular to an extending direction of the arms **12.** A rotor **14,** a propulsion system **15** of the rotor and a foot stand 16 are provided at each end of the support member **13.**

A signal line protection assembly **136** of the aerial vehicle **10** comprises the support **13** and the foot stand **16.** The support 13 also functions as a protection sleeve **131.** The protection sleeve **131** can be a carbon tube for receiving a signal line **100** therein.

Referring to **FIGS. 2-4****,** the foot stand **16** comprises a foot stand sleeve **161** for bearing the rotor **14** and the propulsion system **15** that drives the rotor **14.** A portion of the protection sleeve **131** is received in the foot stand sleeve **161.** The protection sleeve **131** receives the signal line **100** therein to prevent the signal line **100** from damages from external environment. In some embodiments, the signal line **100** is used to transmit a driving signal to the propulsion system **15.**

In some embodiments, the signal line **100** can be effectively protected by being received in the protection sleeve **131.** The configuration can also be beneficial in reducing a volume.

Alternatively, the protection sleeve **131** can be otherwise additionally provided. The protection sleeve **131** can be entirely received in the support **13** and the foot stand sleeve **161.**

In some embodiments, the foot stand sleeve **161** can comprise a bearing member **162** and a receiving portion **163.** One side of the bearing member **162** bears the rotor **14** and the propulsion system **15.** The receiving portion is provided at the other side of the bearing member **162** for receiving and fixing the protection sleeve **131.** In some instances, at least two receiving portions **163** can be provided to securely fix the protection sleeve. The receiving portions **163** can be provided at two ends of the other side of the bearing member **162.**

In some instances, glue can be provided at a position where the protection sleeve **131** contacts with the receiving portion **163** so as to further fix the protection sleeve **131.** In some embodiments, glue can also be provided at the other side of the bearing member **162** to further fix the protection sleeve **131.** As compared to conventional structures in which screws and the like are employed, the weight of apparatus is reduced by fixing the protection sleeve **131** by the receiving portion **163** and the glue.

The embodiment of **FIG. 1** shows a quad-rotor aerial vehicle which comprises two supports **13** and four foot stands **16.** The four foot stands **16** are respectively provided at the two ends of each of the two supports **13.** Only one signal line protection assembly comprising one support **13** and two corresponding foot stands **16** is illustrated and described here for the sake of convenience. As shown in **FIGS. 2-4****,** the two ends of the protection sleeve **131** are respectively received in the foot stand sleeves **161** of the two foot stands **16.** In some instances, each end of the protection sleeve **131** is inserted into the receiving portion **163** at one end of the foot stand sleeve **161** and reaches the receiving portion **163** at the other end of the foot stand sleeve **161.**

The protection sleeve **131** is provided with a wire inlet **200.** The bearing member **162** of the foot stand sleeve **161** is provided with a wire outlet **300** at a position corresponding to the end of the protection sleeve **131.** The signal line **100** can be routed through the protection sleeve **131** from the wire inlet **200** to the end of the protection sleeve **131,** and further leaded out to the propulsion system 15 through the wire outlet **300.**

In view of **FIG. 1****,** it can be appreciated that the wire inlet **200** of the protection sleeve **131** is preferably provided at a joint of the support **13** and the arm **12.**

The foot stand **16** is provided with an electronic speed controller compartment **164** for receiving an electronic speed controller **165** of the aerial vehicle **10.** The electronic speed controller **165** controls a rotating speed of a motor of the propulsion system **15** by varying a voltage. The bearing member **162** of the foot stand sleeve **161** can be disposed on the electronic speed controller compartment **164,** and the receiving portion **163** of the foot stand sleeve **161** can be received in the electronic speed controller compartment **164,** such that the protection sleeve **131** can be received in the electronic speed controller compartment **164** to reduce a volume.

The foot stand **16** further comprises a lower cover **166** below the electronic speed controller compartment **164.** One end of the lower cover **166** is connected with one end of the electronic speed controller compartment **164.** The lower cover **166** can be provided with an antenna compartment **167** for receiving an antenna capable of receiving an external signal. The antenna compartment can prevent the antenna from damages of external environment. In some embodiments, the antenna comprises an antenna for image transmission.

In some embodiments, the signal line **100** can comprise a power line and a data line of the electronic speed controller **165** and a data line of a control antenna. The protection sleeve **131** can receive therein the power line and the data line of the electronic speed controller **165** and the data line of the control antenna.

The foot stand **16** further comprises a shock absorber **168.** The shock absorber is connected between the other end of the electronic speed controller compartment **164** and the other end of the lower cover **166.** The shock absorber, the electronic speed controller compartment and the lower cover forms a triangular structure. In some instances, the other end of the electronic speed controller compartment **164** is provided with a fixing portion **1641,** and the other end of the lower cover **166** is provided with a fixing portion **1661.** The two ends of the shock absorber **168** are respectively inserted into a sleeve structure of the fixing portion **1641** and the fixing portion **1661.** The shock absorber **168** can be a hydraulic damping shock absorber.

The signal line and the antenna can be effectively protected by being received respectively in the protection sleeve and the antenna compartment.

A weight of the aerial vehicle can be effectively reduced by fixing the protection sleeve and the foot stand sleeve with glue.

While preferred embodiments of the invention have been shown and described in the disclosure, it will obvious to those in the art that the scope of the invention is not be limited thereto. It is intended that any equivalent modifications or variations made by those ordinarily skilled in the art to the disclosure of the invention is within the scope of the invention as defined in the following claims.

## Claims

1. A signal line protection assembly (136) for an aerial vehicle (10), wherein the signal line protection assembly (136) comprises a foot stand (16) and a protection sleeve (131), the foot stand (16) comprises a foot stand sleeve (161), at least a portion of the protection sleeve (131) is received in the foot stand sleeve (161), the protection sleeve (131) is configured to receive a signal line (100) therein to prevent the signal line (100) from damages of external environment;
wherein the foot stand (16) is provided with an electronic speed controller compartment (164) for receiving an electronic speed controller (165) configured to control a rotating speed of a motor of a propulsion system (15) of the aerial vehicle (10);
wherein the foot stand (16) comprises a lower cover (166) below the electronic speed controller compartment (164), one end of the lower cover (166) is connected with one end of the electronic speed controller compartment (164);
the signal line protection assembly (136) being **characterized in that**
the foot stand (16) further comprises a shock absorber (168) that is connected between the other end of the electronic speed controller compartment (164) and the other end of the lower cover (166), wherein the shock absorber (168), the electronic speed controller compartment (164) and the lower cover (166) form a triangular structure.

2. The signal line protection assembly of claim 1, wherein the foot stand sleeve (161) comprises a bearing member (162) and a receiving portion (163), one side of the bearing member (162) is configured to bear a propulsion system (15) for driving a rotor (14), the receiving portion (163) is provided at the other side of the bearing member (162) for receiving and fixing the protection sleeve (131).

3. The signal line protection assembly (136) of claim 2, wherein glue is provided at position where the protection sleeve (131) contacts with the receiving portion (163) so as to fix the protection sleeve (131).

4. The signal line protection assembly (136) of claim 2, wherein at least two foot stands (16) are provided, two ends of the protection sleeve (131) are respectively received in the two foot stand sleeves (161) of the foot stand (16); the protection sleeve (131) is provided with a wire inlet (200), the bearing member (162) of the foot stand sleeve (161) is provided with a wire outlet (300) at a position corresponding to the end of the protection sleeve (131), the signal line (100) can be routed through the protection sleeve (131) from the wire inlet (200) to the end of the protection sleeve (131), and can be leaded out to the propulsion system (15) through the wire outlet (300).

5. The signal line protection assembly (136) of claim 2, wherein the bearing member (162) of the foot stand sleeve (161) is disposed on the electronic speed controller compartment (164), and the receiving portion (163) of the foot stand sleeve (161) is received in the electronic speed controller compartment (164), such that the protection sleeve (131) is received in the electronic speed controller compartment (164).

6. The signal line protection assembly (136) of claim 5, wherein the lower cover (166) is provided with an antenna compartment (167) for receiving an antenna and preventing the antenna from damages of external environment, the antenna is capable of receiving an external signal.

7. The signal line protection assembly (136) of claim 6, wherein the protection sleeve (131) is configured to receive a data line and a power line of the electronic speed controller (165) and a data line of the antenna.

8. The signal line protection assembly (136) of claim 1, wherein the shock absorber (168) is a hydraulic damping shock absorber.

9. The signal line protection assembly (136) of any one of claims 1 to 8, wherein the other end of the electronic speed controller compartment (164) is provided with a first fixing portion (1641) and the other end of the lower cover (166) is provided with a second fixing portion (1661), wherein the two ends of the shock absorber (168) respectively inserted into a sleeve structure of the first fixing portion (1641) and the second fixing portion (1661).

10. The signal line protection assembly (136) of claim 2, wherein at least two pieces of the foot stand (16) are provided, two ends of the protection sleeve (131) are respectively received in the two foot stand sleeves (161) of the two foot stands (16), wherein each end of the protection sleeve (131) is inserted into the receiving portion (163) at one end of the foot stand sleeve (161) and reaches the receiving portion (163) at the other end of the foot stand sleeve (161).

11. An aerial vehicle (10), wherein the aerial vehicle comprises the signal line protection assembly (136) according to any one of claims 1 to 10.

## Patentansprüche

1. Signalleitungsschutzanordnung (136) für ein Luftfahrzeug (10), wobei die Signalleitungsschutzanordnung (136) einen Ständer (16) und einen Schutzmantel (131) umfasst, der Ständer (16) einen Ständermantel (161) umfasst, mindestens ein Abschnitt des Schutzmantels (131) in dem Ständermantel (161) aufgenommen ist, der Schutzmantel (131) dazu ausgebildet ist, eine Signalleitung (100) darin aufzunehmen, um die Signalleitung (100) vor Schäden von außen zu schützen; wobei der Ständer (16) mit einem elektronischen Geschwindigkeitssteuereinheitsfach (164) zum Aufnehmen einer elektronischen Geschwindigkeitssteuereinheit (165), die dazu ausgebildet ist, eine Drehgeschwindigkeit eines Motor eines Antriebssystems (15) des Luftfahrzeugs (10) zu steuern, bereitgestellt ist;
wobei der Ständer (16) eine untere Abdeckung (166) unter dem elektronischen Geschwindigkeitssteuereinheitsfach (164) umfasst, wobei ein Ende der unteren Abdeckung (166) mit einem Ende des elektronischen Geschwindigkeitssteuereinheitsfachs (164) verbunden ist;
wobei die Signalleitungsschutzanordnung (136) **dadurch gekennzeichnet ist, dass**
der Ständer (16) weiter einen Stoßdämpfer (168) umfasst, der zwischen dem anderen Ende des elektronischen Geschwindigkeitssteuereinheitsfachs (164) und dem anderen Ende der unteren Abdeckung (166) verbunden ist, wobei der Stoßdämpfer (168), das elektronische Geschwindigkeitssteuereinheitsfach (164) und die untere Abdeckung (166) eine dreieckige Struktur bilden.

2. Signalleitungsschutzanordnung nach Anspruch 1, wobei der Ständermantel (161) ein Lagerbauteil (162) und einen Aufnahmeabschnitt (163) umfasst, eine Seite des Lagerbauteils (162) dazu ausgebildet ist, ein Antriebssystem (15) zum Ansteuern eines Rotors (14) zu tragen, der Aufnahmeabschnitt (163) an der anderen Seite des Lagerbauteils (162) bereitgestellt ist, um den Schutzmantel (131) aufzunehmen und zu fixieren.

3. Signalleitungsschutzanordnung (136) nach Anspruch 2, wobei Kleber an einer Stelle bereitgestellt ist, wo der Schutzmantel (131) den Aufnahmeabschnitt (163) berührt, um den Schutzmantel (131) zu fixieren.

4. Signalleitungsschutzanordnung (136) nach Anspruch 2, wobei mindestens zwei Ständer (16) bereitgestellt sind, zwei Enden des Schutzmantels (131) jeweils in den zwei Ständermänteln (161) des Ständers (16) aufgenommen sind; der Schutzmantel (131) mit einem Drahteinlass (200) bereitgestellt ist, das Lagerbauteil (162) des Ständermantels (161) mit einem Drahtauslass (300) bei einer Stelle entsprechend dem Ende des Schutzmantels (131) bereitgestellt ist, die Signalleitung (100) durch den Schutzmantel (131) von dem Drahteinlass (200) zu dem Ende des Schutzmantels (131) geführt werden kann und durch den Drahtauslass (300) aus dem Antriebssystem (15) geführt werden kann.

5. Signalleitungsschutzanordnung (136) nach Anspruch 2, wobei das Lagerbauteil (162) des Ständermantels (161) auf dem elektronischen Geschwindigkeitssteuereinheitsfach (164) angeordnet ist und der Aufnahmeabschnitt (163) des Ständermantels (161) in dem elektronischen Geschwindigkeitssteuereinheitsfach (164) aufgenommen ist, sodass der Schutzmantel (131) in dem elektronischen Geschwindigkeitssteuereinheitsfach (164) aufgenommen ist.

6. Signalleitungsschutzanordnung (136) nach Anspruch 5, wobei die untere Abdeckung (166) mit einem Antennenfach (167) zum Aufnehmen einer Antenne und Vermeiden von Schäden von außen an der Antenne bereitgestellt ist, wobei die Antenne im Stande ist, ein externes Signal zu empfangen.

7. Signalleitungsschutzanordnung (136) nach Anspruch 6, wobei der Schutzmantel (131) dazu ausgebildet ist, eine Datenleitung und eine Stromleitung der elektronischen Geschwindigkeitssteuereinheit (165) und eine Datenleitung der Antenne aufzunehmen.

8. Signalleitungsschutzanordnung (136) nach Anspruch 1, wobei der Stoßdämpfer (168) ein hydraulisch dämpfender Stoßdämpfer ist.

9. Signalleitungsschutzanordnung (136) nach einem der Ansprüche 1 bis 8, wobei das andere Ende des elektronischen Geschwindigkeitssteuereinheitsfachs (164) mit einem ersten Fixierabschnitt (1641) bereitgestellt ist und das andere Ende der unteren Abdeckung (166) mit einem zweiten Fixierabschnitt (1661) bereitgestellt ist, wobei die zwei Enden des Stoßdämpfers (168) in eine Mantelstruktur des ersten Fixierabschnitts (1641) beziehungsweise des zweiten Fixierabschnitts (1661) eingesetzt sind.

10. Signalleitungsschutzanordnung (136) nach Anspruch 2, wobei mindestens zwei Teile des Ständers (16) bereitgestellt sind, zwei Enden des Schutzmantels (131) jeweils in den zwei Ständermänteln (161) der zwei Ständer (16) aufgenommen sind, wobei jedes Ende des Schutzmantels (131) in den Aufnahmeabschnitt (163) an einem Ende des Ständermantels (161) eingesetzt ist und den Aufnahmeabschnitt (163) am anderen Ende des Ständermantels (161) erreicht.

11. Luftfahrzeug (10), wobei das Luftfahrzeug die Signalleitungsschutzanordnung (136) nach einem der Ansprüche 1 bis 10 umfasst.

## Revendications

1. Ensemble de protection de ligne de signal (136) pour un véhicule aérien (10), dans lequel l'ensemble de protection de ligne de signal (136) comprend un pied (16) et un manchon de protection (131), le pied (16) comprend un manchon de pied (161), au moins une partie du manchon de protection (131) est reçue dans le manchon de pied (161), le manchon de protection (131) est configuré pour y recevoir une ligne de signal (100) pour protéger la ligne de signal (100) des dommages de l'environnement extérieur ;
dans lequel le pied (16) est prévu avec un compartiment de régulateur de vitesse électronique (164) pour recevoir un régulateur de vitesse électronique (165) configuré pour réguler une vitesse de rotation d'un moteur d'un système de propulsion (15) du véhicule aérien (10) ;
dans lequel le pied (16) comprend un couvercle inférieur (166) au-dessous du compartiment de régulateur de vitesse électronique (164), une extrémité du couvercle inférieur (166) est raccordée avec une extrémité du compartiment de régulateur de vitesse électronique (164) ;
l'ensemble de protection de ligne de signal (136) étant **caractérisé en ce que** :
le pied (16) comprend en outre un amortisseur (168) qui est raccordé entre l'autre extrémité du compartiment de régulateur de vitesse électronique (164) et l'autre extrémité du couvercle inférieur (166), dans lequel l'amortisseur (168), le compartiment de régulateur de vitesse électronique (164) et le couvercle inférieur (166) forment une structure triangulaire.

2. Ensemble de protection de ligne de signal selon la revendication 1, dans lequel le manchon de pied (161) comprend un élément de palier (162) et une partie de réception (163), un côté de l'élément de palier (162) est configuré pour supporter un système de propulsion (15) afin d'entraîner un rotor (14), la partie de réception (163) est prévue de l'autre côté de l'élément de palier (162) pour recevoir et fixer le manchon de protection (131).

3. Ensemble de protection de ligne de signal (136) selon la revendication 2, dans lequel on prévoit de la colle dans la position dans laquelle le manchon de protection (131) est en contact avec la partie de réception (163) afin de fixer le manchon de protection (131).

4. Ensemble de protection de ligne de signal (136) selon la revendication 2, dans lequel au moins deux pieds (16) sont prévus, deux extrémités du manchon de protection (131) sont respectivement reçues dans les deux manchons de pied (161) du pied (16) ; le manchon de protection (131) est prévu avec une entrée de fil (200), l'élément de palier (162) du manchon de pied (161) est prévu avec une sortie de fil (300) dans une position correspondant à l'extrémité du manchon de protection (131), la ligne de signal (100) peut être acheminée par le manchon de protection (131) de l'entrée de fil (200) à l'extrémité du manchon de protection (131), et peut être dirigée vers le système de protection (15) par le biais de la sortie de fil (300).

5. Ensemble de protection de ligne de signal (136) selon la revendication 2, dans lequel l'élément de palier (162) du manchon de pied (161) est disposé sur le compartiment de régulateur de vitesse électronique (164), et la partie de réception (163) du manchon de pied (161) est reçue dans le compartiment de régulateur de vitesse électronique (164), de sorte que le manchon de protection (131) est reçu dans le compartiment de régulateur de vitesse électronique (164).

6. Ensemble de protection de ligne de signal (136) selon la revendication 5, dans lequel le couvercle inférieur (166) est prévu avec un compartiment d'antenne (167) pour recevoir une antenne et protéger l'antenne contre les dommages de l'environnement extérieur, l'antenne est capable de recevoir un signal externe.

7. Ensemble de protection de ligne de signal (136) selon la revendication 6, dans lequel le manchon de protection (131) est configuré pour recevoir une ligne de données et une ligne d'alimentation du régulateur de vitesse électronique (165) et une ligne de données de l'antenne.

8. Ensemble de protection de ligne de signal (136) selon la revendication 1, dans lequel l'amortisseur (168) est un amortisseur hydraulique.

9. Ensemble de protection de ligne de signal (136) selon l'une quelconque des revendications 1 à 8, dans lequel l'autre extrémité du compartiment de régulateur de vitesse électronique (164) est prévue avec une première partie de fixation (1641) et l'autre extrémité du couvercle inférieur (166) est prévue avec une seconde partie de fixation (1661), dans lequel les deux extrémités de l'amortisseur (168) sont respectivement insérées dans une structure de manchon de la première partie de fixation (1641) et de la seconde partie de fixation (1661).

10. Ensemble de protection de ligne de signal (136) selon la revendication 2, dans lequel au moins deux pièces du pied (16) sont prévues, deux extrémités du manchon de protection (131) sont respectivement reçues dans les deux manchons de pied (161) des deux pieds (16), dans lequel chaque extrémité du manchon de protection (131) est insérée dans la partie de réception (163) au niveau d'une extrémité du manchon de pied (161) et atteint la partie de réception (163) au niveau de l'autre extrémité du manchon de pied (161).

11. Véhicule aérien (10), dans lequel le véhicule aérien comprend l'ensemble de protection de ligne de signal (136) selon l'une quelconque des revendications 1 à 10.
